# EUROPEAN PATENT APPLICATION

(11) **EP 0 588 400 A1**
(43) Date of publication of application: **23.03.1994**
(21) Application number: 93202392.2
(22) Date of filing: 16.08.1993
(51) Int. Cl.: A01G 9/10, A47G 7/00

(54) **Device and method for putting plants and such in the ground**

(30) Priority: 28.08.1992 BE 9200762
(71) Applicant: ALLINVENT, besloten vennootschap met beperkte aansprakelijkheid, B-2950 Kapellen (BE)
(72) Inventor: Kuczynski, Henry Leon, B-2950 Kapellen (BE)
(74) Representative: Donné, Eddy

(57) **Abstract**

Device for putting plants and such in the ground, characterized in that it consist in the combination of a holder (2) which is meant to be placed in the ground (3), and at least one plant container (4) in the shape of a pot, havind a closed or substantially closed side-wall, which fits in said holder (2), whereby one or more plants (5) can be planted in the plant container (4).

## Description

The present invention concerns a device and method for putting plants and such in the ground, whereby these plants can be of any kind whatsoever, such as flowering plants, shrubs, little trees and other crops, including even sods.

The invention hereby aims a device which makes it possible to put plants in a simple manner in the ground in particular places and to easily remove them again in due time, whether or not to be replaced by other plants.

Systems for installing pots and systems in which pots can be applied, are already known in different forms, however, none of these systems is apt for putting plants in the ground, whereby these plants can be displaced repeatedly and an unlimited number of times.

For example, from FR 2.132.221 pieces of furniture are known which are provided with openings for putting pots into them. Such pieces of furniture, however, do not provide a solution as far as the putting of plants in the ground is concerned.

Also, one knows systems in which use is made of two reservoirs, i.e. a first reservoir which is filled with soil and in which the plant is placed, and a second reservoir which is filled with water, whereby further means are used to absorb the water from the second reservoir and to supply to the first reservoir as required. Such systems are known from DE 3.046.115 and WO 87/00722. In these systems the reservoir containing the plant has no contact with the outer soil, and consequently is fully dependent upon wetting out of the water reservoir, having the disadvantage that the latter always has to be refilled.

Further, from US 4.142.324 a system is known which consists of two pots which are fixed in each other, but which can be turned with respect to each other. Both pots are provided with apertures which, when the pots are turned with respect to each other, are covered regarding each other. In the other position the apertures are positioned precisely opposite to each other and the roots of the plant are visible. As soon as the plant becomes too large, the pot is turned into a position, such that the roots are visible, and is deposited in a subsequent larger pot, such, that the roots can grow through without removing the plant from the first pot. This is a complex manner of above-ground potting and cannot be used for repeatedly depositing plants in the ground.

Also transporting means for moving plants, especially trees, are already known. An example thereof is described in DE 95.263.

A device for putting plants in full ground, using pot-like elements, is known from US 2.741.875. This device provides in a system which consists of two pots which can slide in each other and between which a space is provided for the circulation of ambient air. The space is obtained by means of three distance holders. Hereby, the distance holders, which are mounted on the inner pot, slide in recesses in the outer pot, in order to prevent the rotation of the two pots in respect to each other. Both pots are provided with small perforations at their entire surface.

The object of the device which is described in US 2.741.875 does not consist in changing plants in the ground, but consists in preventing a growth-interruption when planting in heated areas, such as greenhouses and the like. With this device, after some time, changing even becomes completely impossible, as the heavy perforated wall of both of the pots admits uninhibited growing-through of roots, resulting in the impossibility of taking out.

Obviously, this system is intended to be removed after the harvest completely from the ground, in other words, both of the pots are put in the ground together and are also removed together. Moreover, after the growing-through of the roots, the pots have no further benefit, and even are inconvenient.

Furthermore, the device which is described in US 2.741.875 shows several other features, making it particularly useful for potting in greenhouses, but making it unuseful for unlimited placing and removing of plants in the ground, more particularly as mentioned hereafter.

A first of these features consists in that the device as described in US 2.741.875 does not provide in a direct contact with the ground or the outer soil, and consequently depends upon external irrigation until the roots have grown through the inner pot, the inner space and the outer pot.

A second feature consists in that a space exists between the two pots which is in connection with the environment, such, that the temperature becomes adapted to the air of the environment. In the case that a plant is put in the ground in the outer air it is, however, desirable that the temperature of the surrounding ground is maintained in the pot as good as possible, which is certainly not the case in the embodiment according to US 2.741.875.

A third disadvantageous feature of US 2.741.875 consists in that the inner pot cannot be turned in respect to the outer pot, which makes it impossible to place a plant in a particular direction. Moreover, in case of an eventual growing-through of the roots, it becomes impossible to break the roots by means of a simple rotational movement of the inner pot in the outer pot.

Thus, the object of the present invention consists in displacing plants and trees in the ground for an unlimited number of times, without damaging said plants or trees.

To this aim the invention concerns a device for putting plants in the ground, characterized in that it consists in the combination of a holder which is meant to be placed in the ground, and at least one plant container in the shape of a pot, having a closed or substantially closed side-wall, which fits in said holder, whereby one or more plants can be planted in the plant container. As the side-wall is closed or substantially closed, the growing-through is completely or mainly prevented, such that displacing the plants always remains possible.

It is clear that the plants which are put in a plant container in this manner can be easily moved by taking them out of the holder together with the plant container, after which in the same simple manner another plant, which is planted in a similar manner in a plant container, can be put in its place.

It is also clear that the device can be used for different purposes.

For example the maturation, growth and/or flowering process of certain plants and their fruits, in particular of plants which are normally planted out perennially in the ground, can be easily speeded up by putting these plants in plant containers as mentioned above, which, in order to speed up said process are placed in a conservatory or greenhouse after which they are put in the ground again at the right moment, whereby this can be easily done by placing the plant containers in the holders, which always remain in the ground. On the other hand, it is also possible to slow down a process by putting the plants for example in a shadowy place or in the cellar.

In an analogous manner, it is also possible to put non-hardy plants in the ground of the garden or such in summer, whereas they can be easily put back inside again in winter, so as to protect them against frost.

Another advantage of the invention consists in that certain garden plants or such can be easily put inside on certain occasions, such as flowering plants at the occasion of a party or celebration, a christmas tree at Christmas, etc.

The invention also offers the advantage that in the place where a holder is provided in the ground a plant as desired can be put in the ground at any time of the year in a non-laborious manner. This makes it possible to easily replace the plants according to their flowering time, such that there are always flowering plants, whereas the plants which are not yet flowering or which have finished flowering can be put in a less interesting place, for example a place which is hidden from view. Thus it is also possible to put trees closer to the house or such when they are bearing fruit, such that these fruits are always ready at hand. In this way, flowering plants can be put near the house in summer and evergreens and conifers in winter. Plants which have a low tolerance for the sun can be temporarily put in sight during their flowering time, even in the sun, and be put in a shadowy place again afterwards.

Consequently, the device is a very suitable aid for landscape architecture. By providing several holders in the ground, it is easy to experiment when laying out a garden so as to obtain the best plant arrangement by moving the plants in relation to one another until the desired effect is obtained. In the gardens of hotels, restaurants and such, as well as in parks, flowering plants can always be provided for making use of the above-mentioned device.

The device is also particularly suited for the rental of all sorts of plants, such that any desired plants can be rented at any time and be placed in the ground of a garden or such, after which they can be returned.

The device is also advantageous in that it can be used to avoid that certain plants which are planted out in lawns and which flower in spring, such as crocuses, are moved off together with the grass after their flowering time. By making use of the device according to the invention this can be avoided by planting out these plants in a plant container which is covered with sods at the height of its top edge, whereby this plant container is placed in a holder provided in the lawn in spring, and is removed again after the flowering of the plants, whereby a plant container is placed in the holder in the place of the latter in which sods only are planted out.

Analogously, bulbs which annually multiply can be very easily taken out of the ground without therefore having to damage the actual lawn.

Another advantage consist in that the evaporation in a plant container according to the invention is much smaller than in a pot standing aboveground, as it conserves the ground temperature and does not stand in the direct sunlight. Moreover, the plant container cannot be blown over.

Another advantage of the use of the device consist in that the soil can be manured very locally and in that the type of soil can be easily adjusted to the plant concerned.

As the device allows for plants to be easily moved, plants which are quickly affected by town pollution can be easily put in a healthy environmemt for a while, so that they can recover. By making use of devices according to the invention, the sight or setting of town parks and such can be easily altered.

A plant which is kept in a plant container according to the invention can be put in the ground without damaging the roots when it becomes to big.

In the vegetable garden, plants such as lettuce and parsley can be cultivated in the above-mentioned plant containers and be delivered to restaurants or private consumers in these containers, such that these vegetables remain garden-fresh.

According to a preferrred embodiment said holder has no bottom plate, as opposed to the plant container which is preferably provided with a bottom plate, but with openings, such that a connection is always provided between the earth from the ground and the earth with which the plant container is filled, which provides the advantage that, as far as the moisture regulation is concerned, the whole works as if the plant had been planted directly in the ground.

More specially, in preference the plant container is provided with through-connections for the moist regulation in the plant container, whereby this through-connections are of such concept that the growing-through of roots is kept limited or is impossible. In this manner the plant concerned can pick up a lot of moisture from the ground and the device has a large autonomy, whilst the plant containers can always be displaced.

According to another particular characteristic, at the upper side, the device is completely closed between the holder and the plant container. By doing so the temperature of the surrounding ground is kept in the plant container, and quick cooling down or heating up is prevented.

According to still a particular characteristic of the invention, the plant container is turnable in the holder, such that the plant can be placed in all directions and that, in case there must be a growing-through of roots, these can be broken by means of a simple rotational movement.

The invention also concerns a method for putting plants in the ground, characterized in that the it consists in that a holder is placed in the ground and in that the plants are planted in a plant container which is placed in the above-mentioned holder such that it can be removed.

In order to better explain the characteristics according to the invention, by way of example only and without being limitative an any way, the following preferred embodiments are described with reference to the accompanying drawings, in which:
figure 1 shows a device according to the invention, together with an aid to place the plant container in the holder, to remove it from it respectively;
figure 2 shows the device from figure 1 to a larger scale and as a section for the situation whereby the plant container is put in the holder while it is empty;
figure 3 shows a variant of the part which is indicated in figure 2 with F3;
figure 4 shows a plant container according to the invention which is provided with accessories to move it.

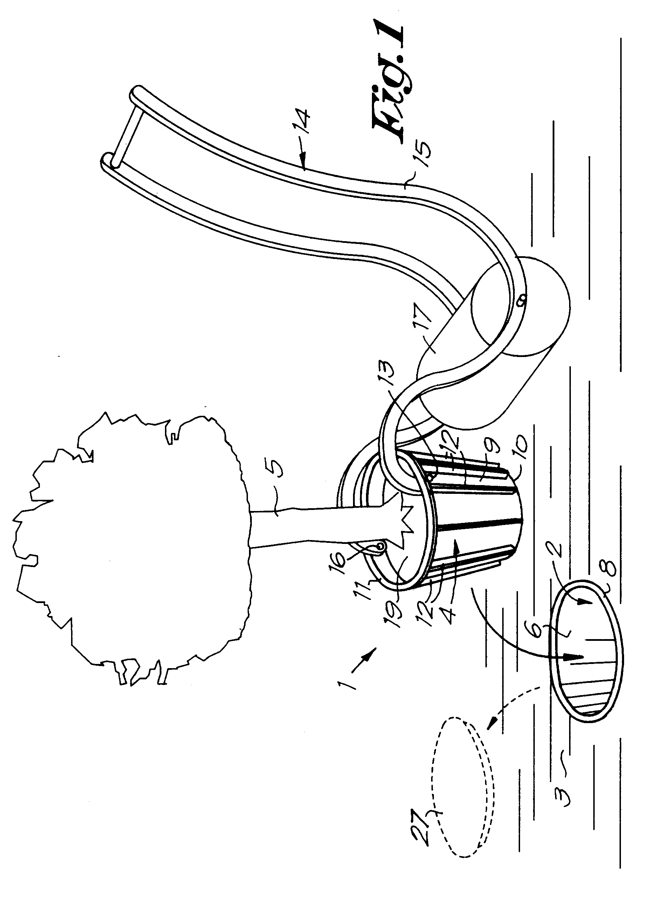

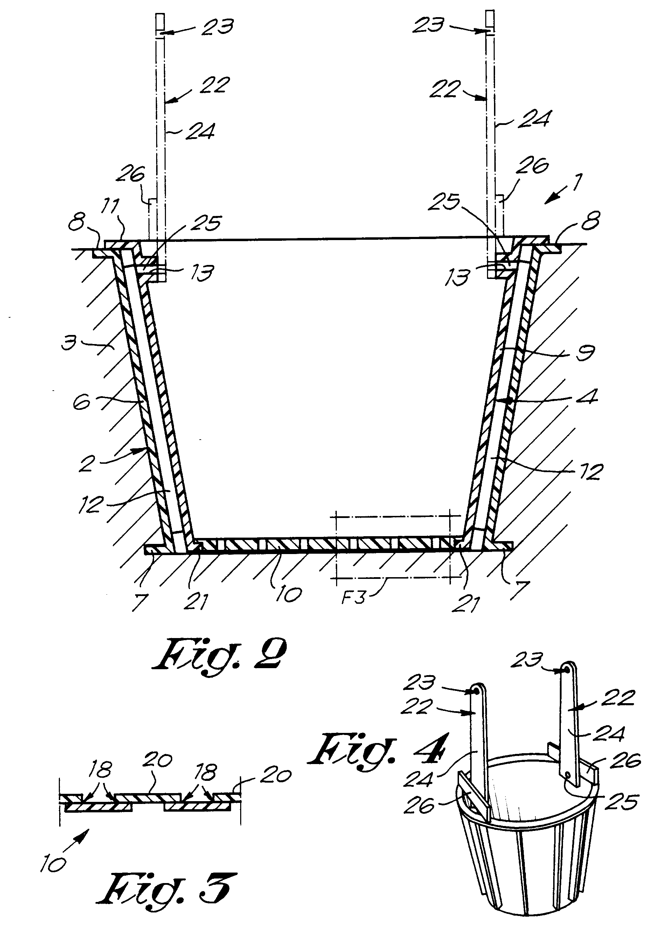

As shown in figures 1 and 2, the device 1 according to the invention mainly consists of the combination of a holder 2 which is meant to be placed in the ground 3, and at least one plant container 4 in the shape of a pot, having a closed or substantially closed side-wall, which fits in the above-mentioned holder 2, whereby one or several plants 5 can be planted in the plant container 4.

As shown in the figures the holder 2 mainly consist of a cylindrical wall 6, whereby the top end of the thus formed cilinder is open. The holder 2 is preferably also bottomless.

In order to simplify the appliance and removal of the plant container 4 in the holder 2, both the holder 2 and the plant container 4 are conically shaped, such that the smallest diameter is situated at the bottom.

The holder 2 as well as the plant container 4 preferably have cylindrical sections.

The holder 2 is preferably provided with anchoring means which allow for an anchoring in the ground 3. In the embodiment shown in figure 2 these anchoring means consist of a flange 7 stretching horizontally from the wall 6, which preferably also forms the bottom edge of the holder 2.

The top edge of the holder 2 is provided with a flat collar 8 which provides a good connection with the ground 3.

The plant container 4 mainly consists, as mentioned above, of a pot, formed by a side wall 9 and a bottom plate 10. The top edge of the pot is preferably provided with a collar 11 which works in conjunction with the above-mentioned collar 8 which provides for a sealing between the plant container 4 and the holder 2.

In order to avoid that the plant container 4 sticks to the holder 2 due te contamination or attaches itself firmly to the holder 2 as it were, such that it becomes even more difficult to remove, two distance holders are preferably provided between the holder 2 and the plant container 4. In the example shown in figures 1 and 2 these distance holders consist of vertical ribs 12. These distance holders are preferably part of the plant container 4, and not of the holder 2, as the dirt which may settle between the distance holders can be more easily removed from the plant container 4 than from the holder 2.

The plant container is preferably provided with means which simplify the application in the holder 2 as well as the removal. In the example shown these means consist of openings 13 wich make it possible for the plant container 4 to be held in these openings 13 by means of an aid 14. The openings are situated opposite one another and are situated close to the top edge. As shown in figure 1, the above-mentioned aid 14 may consist of a rollable, lever-shaped frame 15 which can clutch at the openings 13 by means of pens 16. The frame 15 is mounted on a roller 17 with a considerable width, such that the bearing surface is relatively big and such that when heavy weights are rolled, there are hardly any traces on the surface of the ground 3.

It is clear that these last means may also have a different shape. They might for example consist of grips or such which could be applied telescopically in or along the side wall 9 of the plant container 4.

The plant container 4 is provided with one or several through-connections 18 to the ground 3 in order to adjust the moistness of the earth 19 in the plant container 4, in particular to avoid that too much moist is built up in the plant container. In the embodiment shown in figure 2, these through-connections 18 consist of openings in the shape of perforations in the bottom plate 10.

According to a variant, which is represented in figure 3, the through connections may also consist of a bottom plate 10 to be made of overlapping elements 20. This construction is advantageous in that moist can seep through the bottom 10, but in that the roots are kept from growing from the plant container 4 to the underlying ground 3.

When mounted, the bottom side of the plant container 4 is preferably situated at the same height as the bottom side of the holder 2.

As shown in figure 2, the bottom plate 10 of the plant container 4 is preferably but not necessarily loose so as to make sure that, in case the roots do grow through, the plant 5 can still be easily removed with its earth clod from the plant container 4.

Thanks to this loose plate 10, the side wall 9 can always be easily removed from the earth clod, even when the bottom plate 10 is stuck to the earth clod. The bottom plate 10 can be removed herafter from the earth clod, for example by cutting the roots which have grown in the bottom plate 10 by moving a knife between the bottom plate and the earth clod.

The loose bottom plate is of cours applied such in the plant container 4 that the side wall 9 can always be removed. In the example shown in figure 2, the bottom plate 10 is laid on a collar 21 on the inner side of the side wall 9 to this end.

Both the holder 2 and the plant container 4 can be made of plastic.

As is shown in figure 4, as well as schematically in figure 2, the device may contain one or more aids 22 which lower the centre of gravity of the whole in relation to the places where the plant container is finally held to be removed, such that plant containers containing high trees or plants are prevented from tipping over. These aids 22 are made such that they can be attached to the plant container 4 by means of a rigid connection on the one hand, and such that they provide for points of application 23 to take up the plant container 4 which are situated at a certain distance above the plant container on the other hand.

In the example shown the aids 22 consist of vertical laths 24 which can be hooked in the openings 13 by means of pens 25 or such, and through stay rods 26 which work in conjunction with the top edge of the plant container 4 so as to prevent any tipping over. The points of application 23 consist of openings which make it possible for the whole to be removed by means of the above-mentioned aid 14.

As schematically represented in figure 1, the device 1 may also contain a lid 27 with which the top side of the holder 2 can be closed off in case no plant container 4 is provided therein so as to prevent accidents on the one hand, and to avoid that the holder 2 becomes contaminated on the other hand.

The use of the device can be easily derived from the figures and has already been described in detail in the different uses mentioned in the introduction.

It is clear that, for a change, also objects can be placed in the plant containers 4, such as artificial flowers made of synthetic material, artistic garden decorations, etc.

The present invention is in no way limited to the embodiments described by way of example and shown in the accompanying drawings; on the contrary, such a device and method for putting plants in the ground can be made in all sorts of variants while still remaining within the scope of the invention.

## Claims

1. Device for putting plants and such in the ground, characterized in that it consist in the combination of a holder (2) which is meant to be placed in the ground (3), and at least one plant container (4) in the shape of a pot, having a closed or substantially side-wall, which fits in said holder (2), whereby one or more plants (5) can be planted in the plant container (4).

2. Device according to claim 1, characterized in that the holder (2) is bottomless.

3. Device according to any of the above claims, characterized in that the holder (2) and the plant container (4) are conically shaped, such that the smallest diameters are situated at the bottom.

4. Device according to any of the above claims, characterized in that the holder (2) is provided with anchoring means which allow for an anchoring in the ground (3).

5. Device according to claim 4, characterized in that the anchoring means consist of a horizontal, outwardly extending flange (7).

6. Device according to any of the above claims, characterized in that the holder (2) is provided with a flat collar (8) at its top edge.

7. Device according to any of the above claims, characterized in that the plant container (4) is provided with a collar (11) at its top edge which can cooperate with the top edge of the holder (2).

8. Device according to any of the above claims, characterized in that it is provided with distance holders between the holder (2) and the plant container (4).

9. Device according to claim 8, characterized in that the distance holders are part of the plant container (4).

10. Device according to any of the above claims, characterized in that it is provided with means which simplify the application of the plant container (4) in the holder (2), respectively the removal thereof from the holder (2).

11. Device according to any of the above claims, characterized in that the plant container (4) is provided with through-connections (18) for the moist regulation in the plant container.

12. Device according to claim 11, characterized in that the through-connections (18) consist of overlapping elements (20) or perforations in the bottom plate (10).

13. Device according to any of the above claims, characterized in that the plant container (4) has a loose bottom plate (10).

14. Device according to any of the above claims, characterized in that it is provided with one or more aids (22) to lower the centre of gravity of the whole consisting of the plant container (4), the aids (22), the plant (5) and the earth clod in relation to the places where the whole is picked up.

15. Method for putting plants in the ground, characterized in that it consists in that a holder (2) is placed in the ground (3) and in that the plant or plants (5) are planted in a plant container (4) which is placed in the above-mentioned holder (2) such that it can be removed.
